# EUROPEAN PATENT APPLICATION

(11) **EP 1 865 608 A1**
(43) Date of publication of application: **12.12.2007**
(21) Application number: 06730272.9
(22) Date of filing: 28.03.2006
(51) Int. Cl.: H04B 1/16, H04N 5/44

(54) **RECEPTION CONTROL DEVICE, RECEPTION DEVICE, REPRODUCTION DEVICE, RECEPTION CONTROL METHOD, PROGRAM THEREOF, AND RECORDING MEDIUM CONTAINING THE PROGRAM**

(30) Priority: 31.03.2005 JP 2005102535
(71) Applicant: Pioneer Corporation, Tokyo 153-8654 (JP)
(72) Inventor: OCHI, Junya c/o PIONEER CORPORATION Kawagoe, Saita ma; 3508555 (JP)
(74) Representative: Haley, Stephen
(86) International application number: PCT/JP2006/306324
(87) International publication number: WO 2006/106684

(57) **Abstract**

When a receiving state detected by a receiving level detector becomes equal to or lower than a predetermined receiving level, a traveling state of a vehicle is determined even if an area is judged to be an area capable of performing reception according to map information and a current position. When the vehicle is stopped or slowed, it is determined that the current vehicle position is at a point or in an environment where reception failure is caused locally by congestion or the like, and an automatic tuning process is thus inhibited. When congestion or temporary reception failure occurs, a state of the reception failure can be appropriately determined, and it is possible to eliminate complicated input operation for resetting when the automatic tuning process is performed unintentionally. The automatic tuning process can be appropriately executed and a reception unit (220) can appropriately receive broadcast waves, thereby improving usability.

## Description

### TECHNICAL FIELD

The present invention relates to a reception control device, a reception device, a reproduction device, a reception control method, a program thereof, and a recording medium recorded with the program, for controlling reception of a reception unit that receives radio waves of a predetermined frequency band at a current position of a moving body.

### BACKGROUND ART

There has conventionally been known a configuration for conducting automatic tuning when receiving sensitivity deteriorates in a radio reception device. In the radio reception device for performing the automatic tuning, also known is a configuration for controlling the automatic tuning on the basis of a position of an own vehicle (refer to, e.g., Patent Document 1).

According to the configuration disclosed in Patent Document 1, when the receiving sensitivity of the radio reception device for a frequency of a specific broadcast station decreases to a level equal to or lower than a predetermined level during traveling, a reader of a navigation device reads map information and information on a broadcast station providing receivable radio waves in a receiving area at each position, which are recorded on a recording medium. Further, the automatic tuning is conducted by selecting the broadcast station frequency receivable at the current position in current position information acquired by the navigation device, with the same broadcast content as that of the broadcast station from which a broadcast content has been received so far. Further, if the radio waves become unable to be received at a point out of reach of the radio waves, such as tunnel interior, it is determined based on the map information of the navigation device that the current location is at a point out of reach of the radio waves, such as tunnel interior. In this case, the automatic tuning operation is inhibited, thus eliminating a futile operation of the automatic tuning.

[Patent Document 1] Japanese Patent Number 2928722 B (p.2)

### DISCLOSURE OF THE INVENTION

### PROBLEMS TO BE SOLVED BY THE INVENTION

Incidentally, according to the configuration as disclosed in Patent Document 1, in which the automatic tuning is inhibited on the basis of the map information and the current position, even when a reception failure does not occur during normal traveling, for example, if a reception-disabled state or the reception failure such as radio interference is caused during traffic congestion because a vehicle is shadowed by buildings or large-sized trucks are jammed around the vehicle, the automatic tuning for searching for other broadcast station frequencies with the same broadcast content is carried out. In the case of a local reception failure as in the traffic congestion, however, other broadcast station frequencies with the same broadcast content cannot be obtained at that point, resulting in a state where the automatic tuning cannot be performed. For example, because the broadcast radio station received so far cannot be received again when passing this point, such a problem occurs that a user needs to perform an input operation for causing the original broadcast station frequency to be received, which is time-consuming.

The present invention has been made in view of the above-mentioned circumstances, and it is an object of the present invention to provide a reception control device, a reception device, a reproduction device, a reception control method, a program thereof, and a recording medium recorded with the program, which enable the radio waves to be favorably received in a reception unit.

### MEANS FOR SOLVING THE PROBLEMS

According to the present invention, there is provided a reception control device for controlling reception of radio waves in a reception device mounted to a moving body, the reception device including: a reception unit for receiving radio waves of a predetermined frequency band at a current position of the moving body; a receiving state detector for detecting a receiving state of the radio waves; and a radio wave searching unit for executing a radio wave searching process of making the reception unit receive the radio waves that are receivable at a different frequency band when the receiving state of the radio waves deteriorates, the reception control device including: a moving state information acquiring unit for acquiring moving state information on a moving state of the moving body; and a reception control unit for performing, when the deterioration of the receiving state of the radio waves is recognized by the receiving state detector, control of regulating execution of the radio wave searching process by the radio wave searching unit on the basis of the moving state of the moving body.

Further, according to the present invention, there is provided a reception device including: a reception unit for receiving radio waves of a predetermined frequency band at a current position of a moving body; a receiving state detector for detecting a receiving state of the radio waves; a radio wave searching unit for executing a radio wave searching process of making the reception unit receive the radio waves that are receivable at a different frequency band when recognizing that the deterioration of the receiving state of the radio waves has been detected; and the reception control device described above.

Further, according to the present invention, there is provided a reception device mounted to a moving body, including: a reception unit for receiving radio waves of a predetermined frequency band at a current position of the moving body; a receiving state detector for detecting a receiving state of the radio waves received by the reception unit; a moving state information acquiring unit for acquiring moving state information on a moving state of the moving body; and a reception control unit for performing, when recognizing that a deterioration of the receiving state of the radio waves has been detected, control of making the reception unit receive radio waves of another frequency band on the basis of the moving state of the moving body.

Further, according to the present invention, there is provided a reproduction device including: the reception device described above according to the present invention; and an output control unit for processing the radio waves received by the reception device and making the output unit output the processed radio waves.

Further, according to the present invention, there is provided a reproduction device including: a movement supporting device for supporting a movement of a moving body by detecting a moving state of the moving body; and the reception device described above according to the present invention, for controlling reception of the radio waves on the basis of the moving state of the moving body detected by the movement supporting device.

Further, according to the present invention, there is provided a reception control method of controlling, by a calculation unit, reception of radio waves in a reception device mounted to a moving body, the reception device including: a reception unit for receiving radio waves of a predetermined frequency band at a current position of a moving body; a receiving state detector for detecting a receiving state of the radio waves; and a radio wave searching unit for executing a radio wave searching process of making the reception unit receive the radio waves that are receivable at a different frequency band if the receiving state of the radio waves deteriorates, the reception control method including: recognizing, by the calculation unit, a moving state of the moving body; and performing, by the calculation unit, when the receiving state detector recognizes that the deterioration of the receiving state of the radio waves has been detected, control of regulating execution of the radio wave searching process by the radio wave searching unit on the basis of the moving state of the moving body.

Further, according to the present invention, there is provided a reception control method of controlling, by a calculation unit, reception of radio waves in a reception unit mounted to a moving body, for receiving the radio waves of a predetermined frequency band at a current position of the moving body, the reception control method including: recognizing a receiving state of the radio waves received by the reception unit and recognizing a moving state of the moving body; and performing, when recognizing the deterioration of the receiving state of the radio waves, control of making the reception unit receive radio waves of another frequency band on the basis of the moving state of the moving body.

Further, according to the present invention, there is provided a reception control program which causes a calculation unit to execute the reception control method described above according to the present invention.

Further, according to the present invention, there is provided a recording medium recorded with a reception control program according to the present invention, which is recorded with the reception control program by a calculation unit in a readable manner.

### BRIEF DESCRIPTION OF DRAWINGS

FIG. 1 is a block diagram showing a schematic configuration of a reproduction system according to an embodiment of the present invention.
FIG. 2 is a block diagram showing a schematic configuration of a reception device constituting the reproduction system according to the embodiment of the present invention.
FIG. 3 is a block diagram showing a schematic configuration of a movement supporting device constituting the reproduction system according to the embodiment of the present invention.
FIG. 4 is a block diagram showing a schematic configuration of a reception control device constituting the reproduction system according to the embodiment of the present invention.
FIG. 5 is an operation flowchart showing a guiding/leading process of the reproduction system according to the embodiment of the present invention.
FIG. 6 is an operation flowchart showing an automatic tuning process according to the embodiment of the present invention.
FIG. 7 is an operation explanatory view showing a relation between a moving state of a vehicle and map information according to the embodiment of the present invention.

### EXPLANATION OF CODES

- 100: reproduction system as reproduction device
- 200: reception device
- 220: reception unit
- 241: receiving level detector as receiving state detector
- 242: receiving frequency band setting unit as radio wave searching unit
- 243: output control unit
- 300: speaker as output unit
- 400: notifying unit also capable of functioning as output unit
- 420: display unit also capable of functioning as output unit
- 500: sensor also functioning as moving state information acquiring unit (moving state detector)
- 600: movement supporting device
- 610: storage unit also functioning as map information acquiring unit
- 621: sensor unit also capable of functioning as current position information acquiring unit, moving state detector, and moving state information acquiring unit
- 622: communication unit also functioning as map information acquiring unit
- 625B: current position recognizing unit also functioning as current position information acquiring unit
- 625E: notifying control unit also capable of functioning as output control unit
- 700: reception control device
- 710: moving state recognizing unit as moving state information acquiring unit
- 720: current position information acquiring unit
- 730: map information acquiring unit
- 740: reception control unit

### BEST MODE FOR CARRYING OUT THE INVENTION

An embodiment of the present invention will hereinafter be described with reference to the drawings. The embodiment of the present invention will exemplify a reproduction system serving as a reproduction device that includes a reception device having a reception control device according to the present invention, for implementing a function of reproducing broadcast waves with an output unit mounted to a moving body and supporting movement of the moving body. It should be noted that the present invention can be, without being limited to this system configuration, targeted at any modes including an integrated apparatus configuration. Further, a configuration which includes neither the output unit nor the movement support configuration may also be employed. Also, the target waves can include not only broadcast waves, but also radio waves for various applications, such as radio waves for communication.

### [Configuration of Reproduction System]

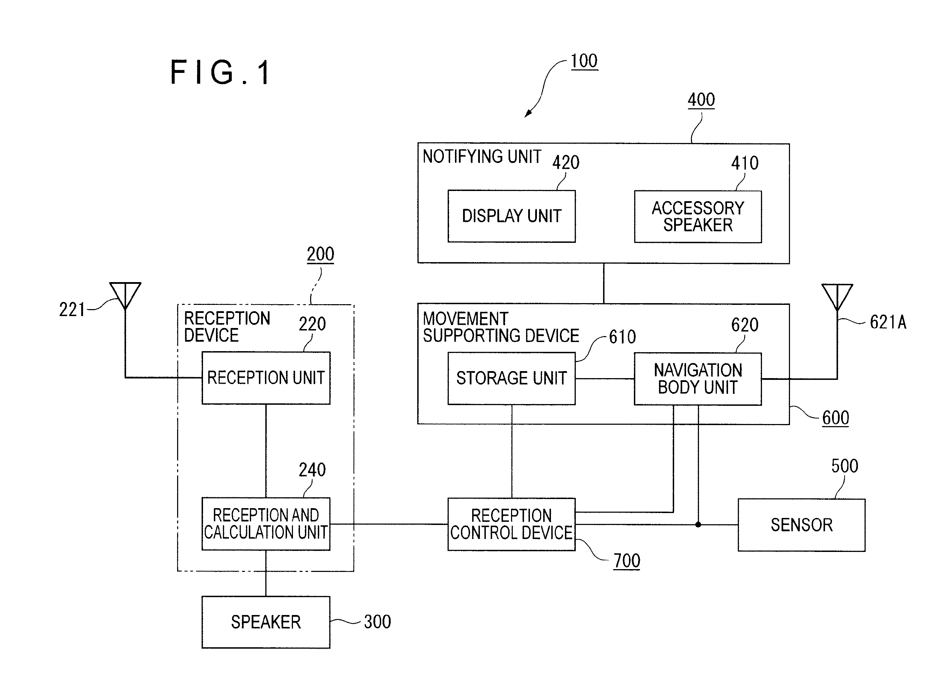

FIG. 1 is a block diagram showing a schematic configuration of the reproduction system in the embodiment according to the present invention.

In FIG. 1, reference numeral 100 denotes the reproduction system serving as a reproduction device. The reproduction system 100 is a system that is mounted to, e.g., a vehicle serving as a moving unit, and executes processes of acquiring the broadcast waves from a broadcast station and reproducing the thus-acquired broadcast waves, and supporting the movement of, e.g., the vehicle as the moving body. The reproduction system 100 includes a reception device 200, a speaker 300 as the output unit, a notifying unit 400 also capable of functioning as the output unit, a sensor 500 also functioning as a moving state information acquiring unit as a moving state detector, a movement supporting device 600, and a reception control device 700.

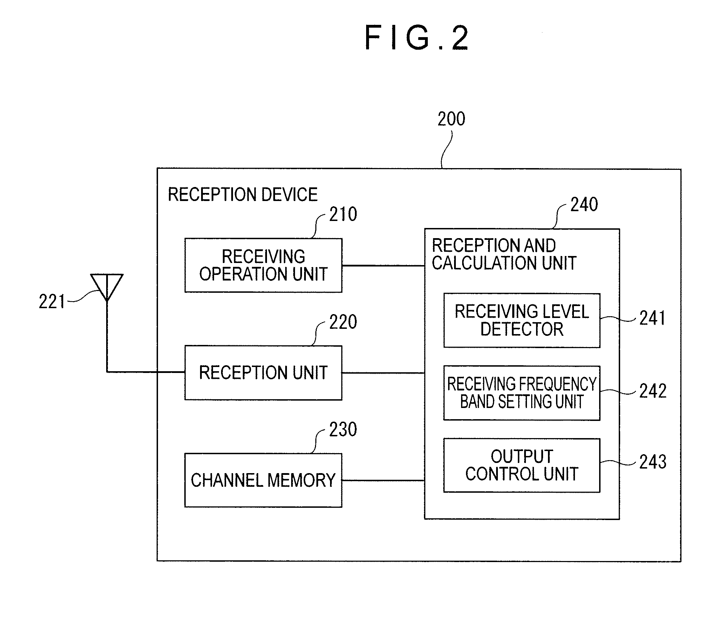

The reception device 200 receives the radio waves, i.e., the various broadcast waves of a TV broadcast, a radio broadcast, a satellite broadcast, etc., and reproduces the received broadcast waves via the speaker 300 by appropriately processing the received broadcast waves. The reception device 200 is connected to the reception control device 700 so as to be able to transmit and receive various items of information. For example, the reception device 200 is constructed integrally with the reception control device 700, and is mounted to a vehicle (not shown). Note that the reception device 200 may be, without being limited to the integrated configuration with the reception control device 700, constructed separately from the reception control device 700. In the reception device 200, the state of receiving the broadcast waves to be received is appropriately controlled based on a control signal output from the reception control device 700. The reception device 200 includes, as illustrated in FIG. 2, a receiving operation unit 210, a reception unit 220, a channel memory 230, and a reception and calculation unit 240.

The receiving operation unit 210 has various operation buttons and operation knobs (not shown), through which a user who boards the vehicle makes input operations, for example. As to setting items for setting operation contents of the reception device 200, examples of contents of the input operations of those operation buttons and operation knobs include setting of a predetermined frequency band received by the reception unit 220, setting of an output state for outputting radio waves from the speaker 300, and setting of automatic or manual reception in automatic tuning.

The reception unit 220 has a receiving antenna 221. The reception unit 220 receives the radio waves through the receiving antenna 221 at a frequency band set through the input operation by the receiving operation unit 210, a frequency band stored in the channel memory 230 selected by the input operation, or a frequency band set by the reception and calculation unit 240, and demodulates the received radio waves, thereby acquiring content data which is a broadcast program that is being broadcast. Then, the reception unit 220 outputs the acquired content data to the reception and calculation unit 240.

The channel memory 230 is configured to have a table structure for storing a plurality of pieces of channel information on, e.g., channels for specifying broadcast stations specified by frequency bands set at a shipping stage, channels of frequency bands receivable by a scan process executed by the manual operation of the user in initial setting etc., or channels of frequency bands input by the manual operation, in which specific information such as a frequency band, a channel number for specifying the frequency band, and a numerical value of the frequency are associated with each other as one data structure. The channel memory 230 can employ various configurations of, e.g., a drive and a driver for storing the channel information in a semiconductor memory or various recording media in a readable manner. The channel memory 230 is connected to the reception and calculation unit 240 and the channel information is stored in the readable manner in the channel memory 230 by the reception and calculation unit 240.

The reception and calculation unit 240 includes, e.g., a central processing unit (CPU), and controls the overall operation of the reception device 200. The reception and calculation unit 240 includes a receiving level detector 241 serving as a receiving state detector, a receiving frequency band setting unit 242 as a radio wave searching unit, and an output control unit 243.

The receiving level detector 241 detects a receiving state of the radio waves received by the receiving antenna 221 in a region where the vehicle employing the reproduction system 100 is positioned. In other words, the receiving level detector 241 detects a receiving level as a receiving state of the radio waves such as very high frequency waves of a content provided by, e.g., a frequency modulation (FM) broadcast or a television (TV) broadcast received by the receiving antenna 221. Then, the receiving level detector 241 outputs the state of the detected receiving level to the receiving frequency band setting unit 242. Note that the receiving level detector 241 may employ a configuration in which, upon recognizing that the detected receiving level is equal to or lower than a predetermined receiving level defined as a preset threshold value, a signal indicating the recognition is output to the receiving frequency band setting unit 242.

The receiving frequency band setting unit 242, when acquiring the state of the receiving level detected by the receiving level detector 241 and recognizing that the detected receiving level has become lower than the predetermined receiving level as the preset threshold value, executes a process including the automatic tuning process defined as the radio wave searching process involving, for example, giving notification by a sound and a buzzer tone from the speaker 300 by outputting a signal indicating therecognition, making the reception unit 220 receive, if the automatic tuning setting has been made by the user, the broadcast waves of another frequency band matching the predetermined receiving level, or making the reception unit 220 receive the broadcast waves of the broadcast program that is the same as the broadcast program having the broadcasting content having been received so far but different in frequency band by the reception unit 220. Further, the receiving frequency band setting unit 242 also executes, based on a control signal given from the reception control device 700, a process of inhibiting the automatic tuning process from being executed. In other words, the receiving frequency band setting unit 242, when recognizing that the receiving level detected by the receiving level detector 241 has become lower than the predetermined receiving level, appropriately executes the automatic tuning process on the basis of the control signal given from the reception control device 700.

The output control unit 243 performs control of appropriately converting sound data in the content data acquired and output by the reception unit 220 into analog signals, and outputting the sounds via the speaker 300, in accordance with an output state that is set and input by the receiving operation unit 210. Note that if the reception device 200 is provided with a display device and the like, the frequency band at which the reception unit 220 receives the broadcast waves may be displayed on a screen of the display device, or annex information regarding character data and content data distributed by being superimposed on the broadcast waves may also be displayed on the screen.

The speaker 300is, for instance, mounted beforehand onto the vehicle, which is connected to the reception device 200 as illustrated in FIG. 1. The speaker 300 outputs the sound data of the analog signals output from the reception device 200 as sounds. Note that the speaker 300 is not limited to the configuration in which the speaker is mounted previously onto the vehicle, but may additionally be mounted onto the vehicle.

The notifying unit 400 is, as illustrated in FIG. 1, connected to the movement supporting device 600 and is mounted to the vehicle. The notifying unit 400, which is controlled by the movement supporting device 600, acquires a notifying signal output from the movement supporting device 600 and notifies the user who boards the vehicle of various types of information by outputting the sounds and displaying the information. The notifying unit 400 includes an annex speaker 410 and a display unit 420 capable of functioning as an output unit.

The annex speaker 410 is provided integrally with, e.g., the movement supporting device 600 and notifies by outputting, as the sounds, the sound data output from the movement supporting device 600. The sound data may include, as in the case of the speaker 300, in addition to the sound data for supporting the movement of the vehicle, for example, the TV sound data received by the reception device 200 and music data read by an external device such as a drive device. The display unit 420 notifies by displaying, on the screen, image data output from the movement supporting device 600. The image data can be exemplified by various categories of image data of static images and pictures, which include map information, image data for supporting the movement of the vehicle, TV image data received by the reception device 200, and the image data read by the external device such as the drive device. For the display unit 420, any display device such as a liquid crystal display panel, an organic electroluminescence (EL) panel, a plasma display panel (PDP), a cathode-ray tube (CRT) panel, a field emission display (FED), or an electrophoretic display panel can be used. Note that the annex speaker 410 and the display unit 420 can, without being limited to the separate configuration, take any form such as a configuration of providing the display unit 420 integrally with the annex speaker 410 and further a configuration of providing the movement supporting device 600 integrally with the display unit 420.

The sensor 500 is disposed in the vehicle, detects a moving state, i.e., the traveling state of the vehicle, and outputs a predetermined detection signal to the movement supporting device 600 and the reception control device 700 each connected to the sensor 500. The sensor 500 includes various sensors (not shown) such as a speed sensor, an azimuth sensor, and an acceleration sensor. The speed sensor is disposed in, e.g., the vehicle defined as the moving body, and detects a traveling speed and an actual acceleration of the vehicle on the basis of signals that fluctuate in correspondence with the traveling speed, i.e., the moving speed of the vehicle. The speed sensor reads a pulse signal and a voltage value that are output by rotations of an axle and a wheel of the vehicle. Then, the speed sensor outputs the detection signals of the thus-read pulse signal and voltage value. The azimuth sensor is disposed in the vehicle and includes a so-called gyro sensor (not shown), detects an azimuth angle of the vehicle, i.e., a traveling direction in which the vehicle travels, and outputs a detection signal regarding the traveling direction. The acceleration sensor is disposed in the vehicle, detects an acceleration of the vehicle in the traveling direction, then converts the detected acceleration into a sensor output value defined as a pulse- and voltage-based detection signal, and outputs the sensor output value. Note that the sensor 500 is not limited to the configuration described above, and any configurations can be applied to the sensor 500 as long as the moving state of the vehicle can be detected, such as a configuration employing any one of the speed sensor, the azimuth sensor, and the acceleration sensor, any appropriate combination thereof, or further, other types of sensors. Note that those various sensors may also be mounted onto the movement supporting device 600.

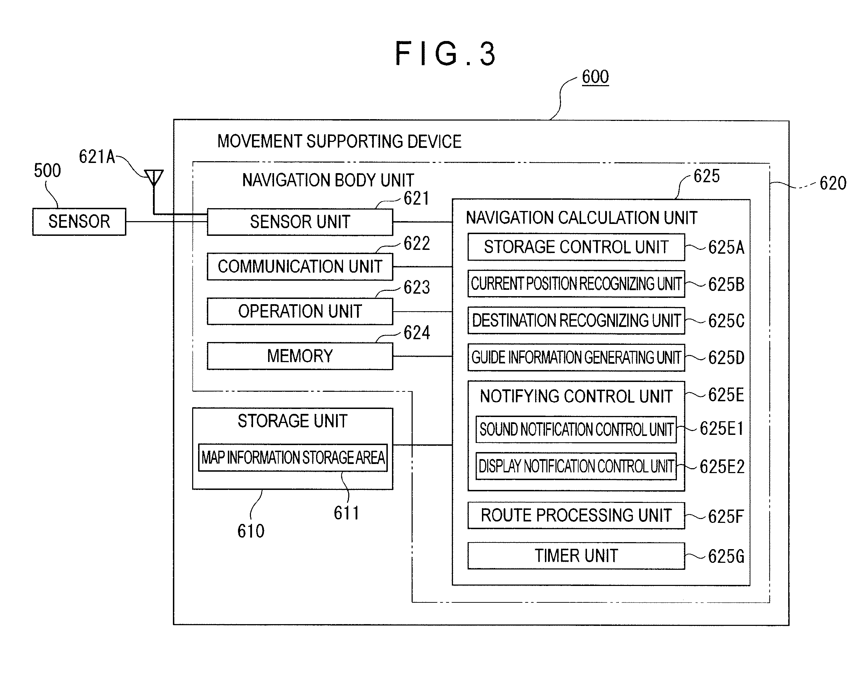

The movement supporting device 600 is mounted onto the vehicle, supports the movement of the vehicle, and can appropriately reproduce the sound data and the image data received by the reception device 200 via the notifying unit 400. The movement supporting device 600 includes, as illustrated in FIG. 3, a storage unit 610 also functioning as a map information acquiring unit, and a navigation body unit 620. The navigation body unit 620 includes a sensor unit 621 also functioning as a current position information acquiring unit, a moving state detector, and a moving state information acquiring unit, a communication unit 622 also functioning as a map information acquiring unit, an operation unit 623, a memory 624, and a navigation calculation unit 625.

The storage unit 610, which is connected to the navigation body unit 620, stores various types of information including the map information in a recording medium such as a magnetic disk, e.g., a hard disk (HD) and a flexible disk (FD), an optical disc, e.g., a compact disc (CD) and a digital versatile disc (DVD), a magneto-optical disc, and a memory card such that the navigation body unit 620 can read the information. The storage unit 610 has a map information storage area 611 for storing the map information containing map configuration information such as traffic information on a traffic condition and facility information on various local facilities such as the broadcast stations and restaurants. The map information storage area 611 is configured to have a table structure in which the map-related information including, for example, display data that is so-called point of interest (POI) data, matching data used for setting a moving state of the vehicle and setting a route along which the vehicle moves, and local specialty configuration information, is divided into a plurality of items in predetermined areas. Further, in the storage unit 610, various types of information such as the sound data and the image data, which are the content data acquired from the reception device 200 and from the external device, can be stored in the readable manner. Note that the storage unit 610 may employ, in addition to the configuration targeting the recording medium that is detachably mounted as the storage unit 610, a configuration in which the recording medium such as the HD is fixed, or further, a configuration using a semiconductor memory. Moreover, a configuration including a plurality of drives or a configuration in which a plurality of recording media can be mounted, may also be employed.

A sensor unit 621 of the navigation body unit 620 detects the movement of the vehicle, i.e., the current position and the traveling condition thereof, and outputs predetermined signals to the navigation calculation unit 625 connected thereto. The sensor unit 621 includes, for example, a global positioning system (GPS) reception unit (not shown). The GPS reception unit receives navigation radio waves output from a GPS satellite (artificial satellite: not shown) by a GPS antenna 621A. Then, the GPS reception unit computes simulation coordinate values of the current position on the basis of signals corresponding to the received navigation radio waves, and outputs the GPS data as the moving state information on the state of the movement of the vehicle to the navigation calculation unit 625. Further, the sensor 500 is connected to the sensor unit 621, and the sensor unit 621 acquires the detection signals output from the sensor 500 and outputs moving state signals as the moving state information on the state of the movement of the vehicle to the navigation calculation unit 625.

The communication unit 622 has a communication antenna (not shown) and acquires the map information, the map configuration information that configures the map information via the communication antenna, and the like. To be specific, the communication unit 622 can acquire various types of information such as the traffic information, the facility information, and the information on the contents of the facilities via, e.g., Beacon and FM multiplexing broadcast or a network such as the telephone network and the Internet, and can acquire even the map information from a server device and the like. Then, the communication unit 622 outputs the acquired map information and the map configuration information to the navigation calculation unit 625 connected thereto as predetermined signals. In this case, the traffic information includes data given from the system providing traffic information, such as vehicle information communication system (VICS) developed in Japan, in which the position information on the map is associated with traffic congestions, traffic accidents, constructions, and traffic regulations. The facility information includes broadcast information in which the on-map position information on the positions of the facilities that outputs the radio waves at predetermined frequencies, such as the broadcast station for outputting broadcast waves and a radio tower is associated with frequency information on radio waves to be output, such as the frequencies and output levels of the radio waves to be output. Note that similar to the reception device 200, the communication unit 622 may be configured such that the various broadcast waves of the TV broadcast, the radio broadcast, the satellite broadcast, and the like are received, and such that the content data, even the annex information on the contents and the character data, and the annex information such as an electronic program guide (EPG), e.g. electronic channel guide, can be obtained. The network can be exemplified by the communication networks such as the Internet, Intranet, local area network (LAN), and a telephone line, which are based on general-purpose protocols such as transmission control protocol/internet protocol (TCP/IP). Further, the communication unit 622, to which, e.g., a mobile phone etc. is detachably connected, may be configured to acquire various types of information by the mobile phone via the communication network.

The operation unit 623 includes, for example, as in the case of the receiving operation unit 210, the various operation buttons and operation knobs (not shown) through which input operations are made by the user who boards the vehicle. The contents of the input operations of the operation buttons and the operation knobs are setting items for setting, e.g., the operation contents of the movement supporting device 600. Specifically, the setting items can be exemplified by the setting of the destination toward which the vehicle moves, searching for information on the various facilities, and setting of the notifying state of the notifying unit 400. The operation unit 623, based on the input operation of the setting items, appropriately outputs the predetermined operation signals to the navigation calculation unit 625 connected to the operation unit 623, thereby making the navigation calculation unit 625 perform the setting. Note that the operation unit 623 is not limited to the input operations of the operation buttons and the operation knobs, and any configuration can be applied to the operation unit 623 as long as the various setting items can be input for setting, such as a configuration that enables an input operation using a touch panel provided to the display unit 420 or an input operation by voice, or a configuration of receiving an operation signal output by a wireless medium such as a remote controller.

The memory 624, which is connected to the navigation calculation unit 625, stores the setting items input through the operation in the operation unit 623, and the map information and the map configuration information such that the navigation calculation unit 625 can appropriately read those items of information. Further, the memory 624 can be employed as a storage area for the calculation process by the navigation calculation unit 625. Further, the memory 624 stores various programs developed on an operating system (OS) that controls the overall operation of the movement supporting device 600. For the memory 624, a memory configured to retain the memory even if the power supply is suddenly stopped due to a power failure and the like, e.g., a complementary metal-oxide semiconductor (CMOS) memory, is desirably used. Note that the memory 624 is not limited only to the semiconductor memory, but may have a configuration including the drive and the driver for storing information in the recording media such as the magnetic disc, the optical disc, the magneto-optic disc, and the memory card in the readable manner as in the case of the storage unit 610.

The navigation calculation unit 625 includes a CPU and has various input/output ports (not shown) connected to the sensor unit 621, the communication unit 622, the operation unit 623, the memory 624, the storage unit 610, the reception control device 700, and the notifying unit 400 such that the various types of information can be transmitted and received. The navigation calculation unit 625 includes, as various programs, a storage control unit 625A, a current position recognizing unit 625B also functioning as a current position information acquiring unit, a destination recognizing unit 625C, a guide information generating unit 625D, a notifying control unit 625E which can also function as an output control unit, a route processing unit 625F, and a timer unit 625G.

The storage control unit 625A controls the communication unit 622 and the storage unit 610, and executes a process of reading the map information, the map configuration information, and the various types of information which are appropriately stored, and a storage process of storing the information. Specifically, the storage control unit 625A executes the storage process of appropriately storing the map information acquired by the communication unit 622 in the map information storage area 611 of the storage unit 610 and storing the various categories of information such as the content data acquired from the communication unit 622 and the external device in the storage unit 610. Further, the storage control unit 625A executes the reading process of reading the various types of information such as the map information stored in the storage unit 610, and outputting the information to the reception control device 700 and the like.

The current position recognizing unit 625B recognizes the current position of the vehicle. To be specific, a plurality of current simulation positions of the vehicle are calculated based on the moving state signals output from the sensor unit 621, which have been obtained by processing the acquired detection signals transmitted from the sensor 500, such as the speed data and the azimuth data of the vehicle. Further, the current position recognizing unit 625B recognizes current simulation coordinate values of the vehicle based on the GPS data regarding the current position that is output from the GPS reception unit of the sensor unit 621. Then, the current position recognizing unit 625B compares the thus-computed current simulation position with the recognized current simulation coordinate values, computes the current position of the vehicle on the map information acquired separately, thereby recognizing the current position. Also, the current position recognizing unit 625B estimates a slope and a level difference of the traveling road on the basis of the acceleration data of the moving state signals output from the sensor unit 621, and computes the current simulation position of the vehicle, thereby recognizing the current position. In other words, the current position of the vehicle can be precisely recognized even at overlapped points on the plane, such as at interchanges and on highways. Further, in traveling along a mountain path and a hill, the current position recognizing unit 625B can recognize the accurate current position by correcting an error between a moving distance obtained from only the speed data and the azimuth data, and an actual traveling distance of the vehicle by use of the detected slope of the road, and the like. Note that the current position recognizing unit 625B can recognize, in addition to the current position of the vehicle described above as the current position, a starting point to be an origin that is input and set by the operation unit 623 as a simulation current position. The various types of information acquired by the current position recognizing unit 625B are appropriately output and stored in the memory 624.

The destination recognizing unit 625C acquires destination information on the destination that is input and set by the input operation of, e.g., the operation unit 623, and recognizes a position of the destination. Various types of position-specifying information such as coordinates (the latitude and the longitude), an address, and a telephone number can be used as the destination information to be set and input. Then, the destination information recognized by the destination recognizing unit 625C is appropriately stored in the memory 624.

The guide information generating unit 625D generates, based on the map information stored in the map information storage area 611, the map configuration information received by the communication unit 622, and the like, guide information used for the notifying unit 400 to notify various guides. The guides to be notified can be exemplified by guidance for supporting the moving condition and the movement of the vehicle, the traffic information, information on the contents of the facilities, and the like. Then, the guide information generating unit 625D outputs the generated guide information to the notifying control unit 625E.

The notifying control unit 625E allows the guide information output from the guide information generating unit 625D to be output and notified by the notifying unit 400 and the speaker 300. The notifying control unit 625E includes an sound notifying control unit 625El and a display notifying control unit 625E. The sound notifying control unit 625E1 allows the sound data of the guide information to be output from the annex speaker 410 and the speaker 300 as sounds, to notify the guide information. The display notifying control unit 625E2 controls the display unit 420 and makes the display unit 420 display the image data of the guide information on the screen to notify the guide information.

The route processing unit 625F searches for a route by calculating a moving route of the vehicle on the basis of the setting item information for setting the route that is set and input by the user and the map information stored in the storage unit 610. Note that the route processing unit 625F determines based on the setting item information whether to take account of the traffic information such as the traffic regulations, the traffic congestion, and prediction of the traffic congestion, and computes the moving route based on requests for searching for the various routes such as a route of a minimum distance and a route that takes minimum time. Based on the operation signal corresponding to the input operation related to the request for setting the moving route, for example, the notifying control unit 625E makes the display unit 420 display a display screen for prompting the user to input the setting of the various conditions, and the setting item information for the route setting is obtained by the input operation according to the display on the screen. The thus-set moving route is output to and appropriately stored in the memory 624. Further, the route processing unit 625F recognizes the reception frequency when the vehicle moves along the moving route and the receiving level thereof on the basis of the set moving route and the information on the broadcast waves as the radio waves output from the facility specified by the facility information in the map configuration information of the map information. Thus, the route processing unit 625F can recognize the frequency band of the broadcast waves at which no reception failure occurs on the moving route, and a moving zone in which no reception failure of the broadcast waves occurs.

The timer unit 625G recognizes the current time based on a reference pulse of, e.g., an internal clock. Then, the timer unit 625G appropriately outputs the time information on the recognized current time.

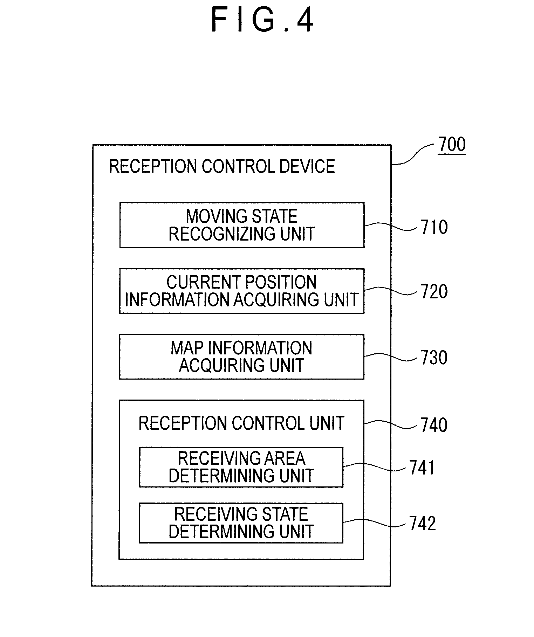

The reception control device 700 is provided to the vehicle as appropriate and is connected to the reception device 200, the movement supporting device 600, and the sensor 500. The reception control device 700 appropriately outputs a control signal to the reception device 200 on the basis of the moving state and the current position of the vehicle, and controls the receiving state of the broadcast waves in the reception device 200. The reception control device 700 includes, as illustrated in FIG. 4, a moving state recognizing unit 710 as a moving state information acquiring unit, a current position information acquiring unit 720, a map information acquiring unit 730 and a reception control unit 740.

The moving state recognizing unit 710 recognizes the moving state of the vehicle by acquiring the detection signal output from the sensor 500 and the moving state signal output via the navigation calculation unit 625 from the sensor unit 621 of the movement supporting device 600. For instance, the moving state recognizing unit 710 determines based on, e.g., the speed data whether or not the moving speed is lower than the traveling speed as the preset threshold value, thereby determining whether the vehicle is traveling, or is slowed or stopped. Further, the moving state recognizing unit 710 determines whether or not the vehicle has traveled a traveling distance defined as the preset threshold value. Then, the moving state recognizing unit 710 outputs to the reception control unit 740 a traveling state signal as a moving state signal regarding the traveling state as the moving state of the vehicle, i.e., whether the vehicles travels or not, and a traveling state signal as a signal indicating that the vehicle has traveled a distance equal to or longer than the predetermined distance.

The current position information acquiring unit 720 acquires the current position information on the current position recognized by the current position recognizing unit 625B of the movement supporting device 600. The acquired current position information is appropriately output to the reception control unit 740.

The map information acquiring unit 730 acquires via the navigation calculation unit 625 the map information obtained by the communication unit 622 of the movement supporting device 600 or the map information stored in the storage unit 610 of the movement supporting device 600. The acquired map information is appropriately output to the reception control unit 740.

The reception control unit 740 outputs, based on the traveling state signal output from the moving state recognizing unit 710 and the current position information and the map information that are output from the current position information acquiring unit 720 and the map information acquiring unit 730, the predetermined control signal to the reception device 200, and controls the receiving state of the broadcast waves in the reception device 200. The reception control unit 740 has a receiving area determining unit 741 and a receiving state deciding unit 742.

The receiving area determining unit 741 determines, based on the current position specified by the current position information acquired from the current position information acquiring unit 720, whether or not the point at which the vehicle is positioned at present is a point at which no reception failure occurs, i.e., whether or not the current position is a specific point at which the reception failure occurs, such as tunnel interior and a parking lot in a building, by use of the map information acquired from the map information acquiring unit 730. Then, the receiving area determining unit 741, when determining that the current position is the specific point at which the reception failure occurs, outputs to the reception device 200 an inhibition signal indicating that an automatic tuning scan process is inhibited. The receiving area determining unit 741 also determines whether or not the point where the vehicle is positioned at present is within a reception failure area to be a non-distribution area where no broadcast waves are distributed. Then, the receiving area determining unit 741, when determining that the current position is within the reception failure area at which the reception failure occurs, determines whether or not the vehicle has traveled a traveling distance passing through the reception failure area on the basis of the traveling state signal output from the moving state recognizing unit 710 or the detection signal output from the sensor 500. The determination of the traveling distance can be exemplified by recognition of the traveling distance based on the distance reaching the non-distribution area on the currently traveling road by use of the acquired map information, recognition of the distance based on the zone of the reception failure area in which the reception failure occurs on the moving route if the moving route is set beforehand, recognition of a temporary reception failure area based on the preset moving distance, and the like. Then, the receiving area determining unit 741, upon recognizing that the vehicle has traveled the predetermined distance, determines that the vehicle has passed through the reception failure area, and when recognizing that the reception failure is caused in the reception device 200, outputs to the reception device 200 an execution signal for making the reception device 200 execute the automatic tuning scan process.

The receiving state deciding unit 742, when recognizing based on the traveling state signal output from the moving state recognizing unit 710 that the vehicle is not traveling, i.e., is stopped or slowed, outputs to the reception device 200 an inhibition signal indicating the inhibition of the automatic tuning scan process. Note that the receiving state deciding unit 742 may, when recognizing that the vehicle is stopped or slowed, acquire the traffic congestion information from the movement supporting device 600, and may, in a case of determining based on the current position information and the traffic congestion information that the vehicle is stopped or slowed due to the traffic congestion, execute a confirmation process of outputting the inhibition signal.

### [Operation of Reproduction System]

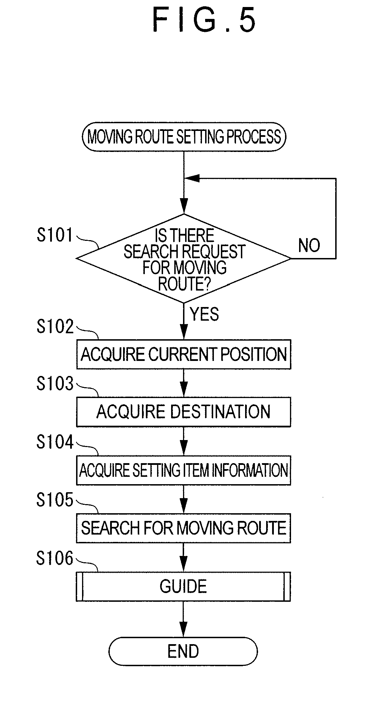

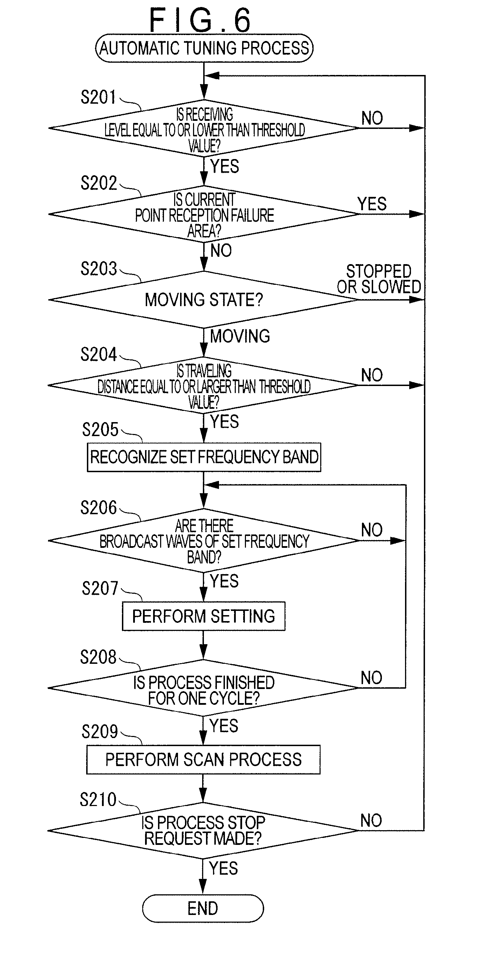

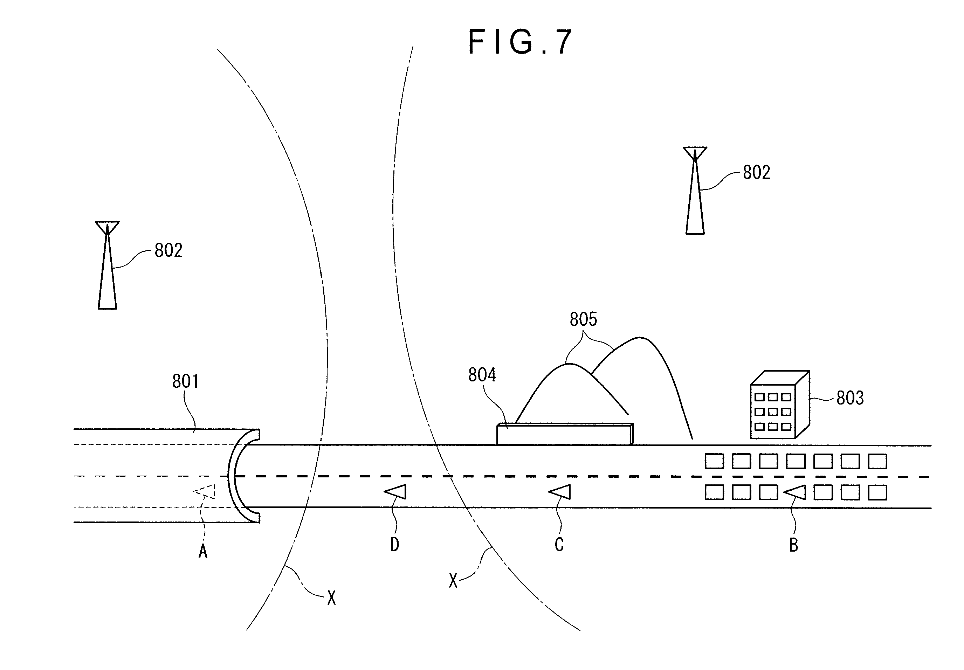

Next, an operation of the automatic tuning process of allowing the automatic tuning to be conducted appropriately according to the traveling state of the vehicle under the control of the reception control device 700, will be described as the operation of the reproduction system 100 with reference to the drawings. Note that a configuration of making a determination by use of information on the moving route will be described as the automatic tuning process, but, the determination is not limited thereto, and may be made based on, e.g., the traveling state, the current position, and the map information without using the moving route. FIG. 5 is a flowchart showing an operation of executing a guiding/leading process of the reproduction system. FIG. 6 is a flowchart showing the operation of the automatic tuning process. FIG. 7 is an explanatory view of the operation showing a relation between the moving state of the vehicle and the map information.

When the person in the vehicle, i.e., the user who boards the vehicle, supplies the electric power by turning ON the power source of the reproduction system 100, the navigation calculation unit 625 of the movement supporting device 600 controls, through the notifying control unit 625E2 of the notifying control unit 625E, the display unit 420 of the notifying unit 400, thereby displaying a main menu. In other words, the navigation calculation unit 625 makes the display unit 420 display a screen for prompting the user to set and input the contents of the operation of the reproduction system 100. Then, as illustrated in FIG. 5, when recognizing the operation signal corresponding to the input operation indicating the request for setting the moving route from the main menu (step S101), the navigation calculation unit 625 makes, through the display notifying control unit 625E2, the display unit 420 of the notifying unit 400 display a display screen for prompting the user to set and input various types of information necessary for searching for the moving route, i.e., the setting item information such as the destination, the minimum distance, and the minimum time.

Further, in the navigation calculation unit 625, when recognizing the various types of information required for searching for the moving route based on the input operation of the operation unit 623, initially, the current position recognizing unit 625B executes a process of recognizing the current position (step S 102), and the destination recognizing unit 625C executes a process of recognizing the set and input destination (step S103). In addition, in the navigation calculation unit 625, the display notifying control unit 625E2 controls the display unit 420 to display a screen for prompting the user of the operation of inputting the setting items which are the conditions for searching for the moving route. Then, when the user sets and inputs the setting items through the input operation of the operation unit 623 according to instructions displayed on the display screen, the navigation calculation unit 625 acquires the setting item information on the set and input setting items and further the map configuration information such as the traffic information obtained by the communication unit 622 (step S104). Those acquired items of information such as the current position information, destination information, setting item information, and map configuration information are appropriately output to and stored in the memory 624.

After that, in the navigation calculation unit 625, the route processing unit 625F executes, based on the current position information, the destination information, the setting item information, and the map configuration information that are stored in the memory 624, a route searching process of searching for the moving route extending from the current position of the vehicle to the destination by use of the map information stored in the map information storage area 611 of the storage unit 610 (step S105). Then, the route processing unit 625F detects a plurality of moving routes, for example, five moving routes matching the setting item information, and generates required time information by calculating a period of time required for the vehicle to reach the destination on each moving route. Subsequently, the display notifying control unit 625E2, when recognizing that the route processing unit 625F has detected the moving routes and generated the required time information, makes the display unit 420 display the moving route information and the required time information on the moving routes, and further makes the display unit 420 display an indication of a request for selection by the user. After that, the moving route is set through the input operation by which the user selects any one piece of moving route information.

With the setting of the moving route, the display notifying control unit 625E2 of the navigation calculation unit 625 acquires the map information at a predetermined reduced scale ratio from the map information storage area 611, and makes the display unit 420 display the set moving route and an icon of the current position to be superposed on the map information. Note that if the input-setting indicating that the map configuration information such as the predetermined traffic information and local specialty configuration information are to be displayed in superposition is previously made, those items of information are appropriately displayed in superposition on the map information according to the map configuration information.

Then, the navigation calculation unit 625 recognizes the moving condition of the vehicle on the basis of the data output from the speed sensor, the azimuth sensor, and the acceleration sensor of the sensor unit 621 and on the basis of the GPS data output from the GPS reception unit. Further, in the navigation calculation unit 625, the sound notifying control unit 625El and the display notifying control unit 625E2 cause the notifying unit 400 to notify the guide information on the movement of the vehicle by display or through voice on the basis of the recognized moving condition and the route guide information contained in the moving route information on the moving route, thus guiding and leading the vehicle (step S106).

The navigation calculation unit 625, when recognizing the operation signal corresponding to the input operation of the operation unit 623, which indicates a request for reproducing and outputting the content while the vehicle is moving, outputs an instruction signal to the reception device 200 via the reception control device 700 to instruct reception of the broadcast waves of the predetermined frequency band. Further, if the reception and calculation unit 240 recognizes the operation signal corresponding to the input operation of the receiving operation unit 210 and if the reception and calculation unit 240 recognizes an instruction signal transmitted via the reception control device 700 from the navigation calculation unit 625, the receiving frequency band setting unit 242 of the reception and calculation unit 240 makes the reception unit 220 receive the broadcast waves of the set frequency band. Then, the received sound data is appropriately processed and output as sounds from the speaker 300. Note that in a case of containing the image data as in the case of the TV broadcast waves, the image data is transmitted to the movement supporting device 600 via the reception control device 700, and such a process is executed that the display notifying control unit 625E2 of the notifying control unit 625E makes the display unit 420 of the notifying unit 400 appropriately display the image data.

Then, if the setting that enables the automatic tuning process to be executed by the receiving operation unit 210 or the operation unit 623 is previously made by the user, as illustrated in FIG. 6, the receiving level detector 241 of the reception and calculation unit 240 detects the receiving state of the broadcast waves received at, e.g., a cycle of a predetermined time. In other words, the receiving level detector 241 determines whether or not the receiving level is equal to or lower than a predetermined receiving level defined as the preset threshold value (step S201). When determining in step S201 that the receiving level is not at a level equal to or lower than the predetermined receiving level, the receiving level detector 241 determines that the broadcast waves are properly received, and returns to step S201 and continues the detecting process.

On the other hand, if it is determined in step S201 that the receiving level is equal to or lower than the predetermined receiving level, the receiving frequency band setting unit 242 outputs a signal indicating the fact to the reception control device 700, whereby the automatic tuning process is brought into a standby status. Then, the reception control device 700, when receiving from the reception and calculation unit 240 the signal indicating that the receiving level is equal to or lower than the predetermined receiving level, determines that the reception failure has occurred, and determines by the reception control unit 740, based on the current position specified by the current position information acquired from the current position information acquiring unit 720 and by use of the map information acquired from the map information acquiring unit 730, whether or not the current point where the vehicle is positioned is a point at which the reception failure does not occur, i.e., whether or not the current point is a specific point at which the reception failure occurs, as in the tunnel or the parking lot in the building (step S202).

Then, the reception control unit 740, when determining in step S202 that the current position is within the reception failure area, determines that the vehicle is positioned at a point A where the broadcast waves cannot be received, for example, in a tunnel 801 or the parking lot in the building as illustrated in FIG. 7, and returns to step 5201 and continues the detection process. In other words, the receiving area determining unit 741 outputs to the reception device 200 an inhibition signal indicating the inhibition of the automatic tuning scan process. In this state, when the vehicle travels some distance and comes out from the tunnel 801, the receiving level is restored in step S201, and the reproduction of the broadcast waves continues.

On the other hand, the reception control unit 740, when determining in step S202 that the current position is not within the reception failure area, determines the traveling state of the vehicle on the basis of the traveling state signal output from the moving state recognizing unit 710. To be specific, the reception control unit 740 determines whether the vehicle is traveling, or is stopped or is slowed (step S203). The reception control unit 740, when determining in step S203 that the vehicle is in a stopped state or is slowed, for example, as shown in FIG. 7, determines that a position B at which the vehicle is currently positioned is located in an environment in which the reception failure is caused due to the fact that the vehicle is at such a point where a ground station 802 is hidden behind a building 803 or where radio interference occurs, or that the vehicle is surrounded by large-sized trucks, due to traffic congestion, and returns to step S201 and continues the detection process. In other words, when the vehicle moves some distance and travels through a point where the reception failure occurs locally, the receiving level is restored in step S201, resulting in the continuation of the reproduction of the broadcast waves. Therefore, the receiving area determining unit 741 outputs to the reception device 200 the inhibition signal indicating the inhibition of the automatic tuning scan process. On the other hand, the reception control unit 740, when determining in step S203 that the vehicle is traveling, determines, based on the traveling state signal output from the moving state recognizing unit 710 and the detection signal output from the sensor 500, whether the vehicle has traveled a predetermined distance or not. In other words, the reception control unit 740 determines whether or not the distance the vehicle has traveled since the occurrence of the reception failure is equal to or longer than a distance defined as a preset threshold value (step S204).

Then, the reception control unit 740, when determining in step S204 that the vehicle has not traveled the predetermined distance, determines that a position C of the vehicle is located at a point near a noise-blocking wall 804 constructed along the traveling road or where the ground station 802 is hidden behind mountains 805 as shown in FIG. 7, for example, and returns to step S201 and continues the detection process. In other words, when the vehicle travels some distance and passes through the point where the reception failure occurs locally, the receiving level is restored in step S201, resulting in the continuation of the reproduction of the broadcast waves. Therefore, the receiving area determining unit 741 outputs to the reception device 200 the inhibition signal indicating the inhibition of the automatic tuning scan process. On the other hand, when the reception control unit 740 determines in step S204 that the vehicle has traveled the predetermined distance, because the reception failure occurs even if the vehicle has traveled the predetermined distance, as illustrated in FIG. 7 for instance, the reception control unit 740 determines that the vehicle is positioned at a position D outside a receivable area X over which the broadcast waves of the frequency band set so far are distributed, i.e., that the vehicle is positioned outside the receivable area where the broadcast waves are not distributed. The reception control unit 740 thereby outputs a signal related to permission for executing the automatic tuning process to the reception device 200.

The receiving frequency band setting unit 242 of the reception device 200 that has received the signal related to the permission for executing the automatic tuning process executes an automatic tuning processing step. For example, the receiving frequency band setting unit 242 reads a stored channel information from the channel memory 230 (step S205), and determines whether or not the broadcast waves of the frequency band of each piece of channel information can be received (step S206). Specifically, the receiving frequency band setting unit 242 determines, based on the current position information and by use of the map information, whether or not a broadcast station that distributes the broadcast waves receivable by the vehicle at the current point where the vehicle is positioned exists. Then, the receiving frequency band setting unit 242, when determining in step S206 that there are broadcast waves that can be received, generates the channel information at the frequency band of the broadcast waves and stores the channel information in the channel memory 230 (step S207). Subsequently, the receiving frequency band setting unit 242 determines whether the determining process of determining whether broadcast waves are receivable or not has been performed for one cycle, i.e., performed with respect to all pieces of channel information (step S208), and when determining that the determining process of determining whether broadcast waves are receivable or not has not been performed for one cycle of information, i.e., is not yet completed, returns to step S206 and repeats the process. Then, when recognizing in step S208 that the receivable broadcast wave determining process is completed, the receiving frequency band setting unit 242 executes a scan process of sequentially switching the frequency bands to be received by controlling the reception unit 220, and executes the process of allowing the receivable broadcast waves to be received (step S209).

Note that the automatic tuning processing step may involve, e.g., detecting whether the broadcast waves can be received or not by executing the scan process, and when recognizing the receivable frequency band, sequentially setting the channel information of the frequency band. Alternatively, if the receivable broadcast waves are found during sequential switchover to channels preset in the channel memory 230, the setting to this channel may be made, and if the broadcast waves cannot be received on all of the preset channels, the scan process may be carried out.

Then, for example, it is determined whether or not the setting input for requesting the termination of the automatic tuning process has been made by the input operation of the receiving operation unit 210 (step S210). When determining in step S210 that the stop request is not made, the broadcast waves are received at the newly-set frequency band, and the operation returns to step S201 in order to determine again the receiving state. On the other hand, when it is determined that the stop request is made, the automatic tuning process is ended.

### [Operational Effect of Reproduction System]

As described above, according to the embodiment of the present invention, the traveling state of the vehicle is determined, and when the receiving level detector 241 recognizes that the receiving state has deteriorated, i.e., the receiving level has become equal to or lower than the predetermined receiving level, a process of causing the automatic tuning process to be carried out or inhibited is carried out on the basis of the traveling state of the vehicle. Therefore, as compared with the case of determining the cause of the reception failure from the map information and the current position of the vehicle, as described above, it is possible to properly determine whether or not the reception failure is a temporary failure even when the vehicle is traveling in the case of the traffic congestion, thereby making it possible to eliminate a nuisance of having to unnecessarily conduct the automatic tuning process, and to avoid the execution of the time-consuming input operation such as resetting. Thus, the reception unit 220 can properly receive the broadcast waves by appropriately executing the automatic tuning process, whereby the usability can be improved.

To be specific, if the vehicle travels at a speed equal to or lower than the predetermined speed, i.e., when the vehicle is stopped or slowed, the current position of the vehicle can be determined to be the point or to be in the environment in which the reception failure locally occurs due to the congestion and the like. As a result, in a case of making the determination from the map information and the current position of the vehicle, even at the point determined to be the receivable area, by inhibiting the automatic tuning process according to the traveling state of the vehicle, it is possible to eliminate the nuisance caused by executing the automatic tuning process and to avoid the time-consuming input operation for resetting, which are due to the temporary reception failure caused by traffic congestion and the like.

Moreover, even when the reception failure occurs within an extremely short distance due to the noise-blocking wall and the like during traveling, by recognizing the moving distance and determining whether or not the reception failure will occur even after moving some distance, the reception failure can specifically be determined to be a temporary reception failure caused by the noise-blocking wall and the like. In addition, the reception unit 220 can appropriately receive the broadcast waves by executing the automatic tuning process more properly, thus improving the usability.

Then, the moving state detected by the movement supporting device 600 is utilized as the moving state of the vehicle. Thus, there is no necessity of separately providing a special configuration for recognizing the moving state of the vehicle, and a simplified configuration can be readily obtained owing to sharing of the moving state information.

Moreover, the state of the reception failure is determined based on the map information and the current position of the vehicle. It is therefore possible to not only regulate the execution of the automatic tuning process simply from the moving state, but also determine the state of the reception failure in more detail, whereby the reception unit 220 can properly receive the broadcast waves by executing the automatic tuning process more adequately.

For the map information and the current position of the vehicle, the map information and the current position of the vehicle used by the movement supporting device 600 to support the movement of the vehicle are used, and thus the simplified configuration is obtained more readily.

The reception control device 700 is structured as a program using, e.g., the CPU. Thus, by installing the program, a degree of freedom of design such as integrally incorporating the reception control device 700 into the reception device 200, that is, making the reception control device 700 function in the reception and calculation unit 240, for example, is improved, and expansion of the usage is readily attained. Moreover, the program is recorded on a recording medium and is appropriately read by a computer etc., which leads to acquisition of a configuration that enables the reception unit 220 to appropriately receive the broadcast waves by adequately executing the automatic tuning process, and enables the program to be easily handled, whereby the expansion of the usage can be readily attained. It should be noted that the calculation unit according to the present invention is not limited to a single computer and may employ: a configuration in which a plurality of computers are connected as a network; devices such as the aforementioned CPU and a microcomputer; or a circuit board mounted with a plurality of electronic parts.

### [Modifications of Embodiment]

It should be noted that the present invention is not limited to the embodiment described above but includes modifications described below within the range in which an object of the present invention can be accomplished.

Specifically, the system configuration including the reception device 200, the movement supporting device 600, and the reception control device 700 has been explained, but the integrated device configuration may also be employed as described above. A system configuration of connecting to the reception device 200, i.e., a system configuration without the movement supporting device 600 may also be employed as an independent device configuration of the reception control device 700. Moreover, a device configuration, which incorporates the reception control device 700 integrally into the reception device 200 may also be employed.

Further, without being limited to the on-vehicle configuration, a portable device such as a portable drive device, a laptop including the drive device, a personal digital assistant (PDA), and a mobile phone may alternatively used as the reception device 200, and the reception control device 700 is connected to the reception device 200 to be used. Further alternatively, the reception control device 700 may be integrally incorporated into the portable device. In other words, the moving body is not limited to the vehicle, an airplane, a ship, and the like, and may also be constructed to execute the process by recognizing a moving state of the user who carries the portable device.

Further, though targeted at the broadcast waves, the target radio waves can include the radio waves for any applications without being limited to the broadcast contents, such as the radio waves for communication of mobile communication terminals.

Further, without providing the configuration that regulates the execution of the automatic tuning process by determining based on the map information and the current position information whether the current position is within an area in which radio waves cannot be received, the execution of the automatic tuning process may simply be regulated based on the moving state alone. Moreover, the moving state, without being limited to the case based on the detection signal detected by the sensor, may be determined from, e.g., the receiving state of the navigation radio waves received by the GPS reception unit, or determined based on a temporal change of the current position based on the simulation coordinate values computed by the GPS reception unit, for example, a changing state of the current position for every predetermined period of time.

In addition, the specific structure and procedures in carrying out the present invention can be appropriately changed to other structures and procedures within the range in which an object of the present invention can be accomplished.

### [Effect of Embodiment]

As described above, the processes are executed, in which the traveling state of the vehicle is determined, and when the receiving level detector 241 recognizes the deterioration of the receiving state, the automatic tuning process is executed or inhibited based on the traveling state of the vehicle. Therefore, as compared with the case of determining the cause of the reception failure from the map information and the current position of the vehicle, the state of the reception failure can be properly determined in the case of the traffic congestion and in the case of the temporary reception failure that occurs during traveling, and it is possible to eliminate the nuisance caused by conducting the automatic tuning process unintentionally and to avoid the time-consuming resetting input operation. In addition, the reception unit 220 can properly receive the broadcast waves by adequately executing the automatic tuning process, thus improving the usability.

### INDUSTRIAL APPLICABILITY

The present invention is applicable to the reception control device, the reception device, the reproduction device, the reception control method, the program thereof, and the recording medium recorded with the program, for controlling reception of the reception unit for receiving radio waves of a predetermined frequency band at a current position of the moving body.

## Claims

1. A reception control device for controlling reception of radio waves in a reception device mounted on a moving body, the reception device including: a reception unit for receiving radio waves of a predetermined frequency band at a current position of the moving body; a receiving state detector for detecting a receiving state of the radio waves; and a radio wave searching unit for executing a radio wave searching process of making the reception unit receive the radio waves that are receivable at a different frequency band when the receiving state of the radio waves deteriorates,
the reception control device comprising:
a moving state information acquiring unit for acquiring moving state information on a moving state of the moving body; and
a reception control unit for performing, when the deterioration of the receiving state of the radio waves is recognized by the receiving state detector, control of regulating execution of the radio wave searching process by the radio wave searching unit on the basis of the moving state of the moving body.

2. A reception control device according to claim 1, wherein the reception control unit performs, when recognizing that the moving state of the moving body based on the moving state information is equal to or lower than a predetermined speed, control of inhibiting the execution of the radio wave searching process by the radio wave searching unit.

3. A reception control device according to claim 1 or 2, wherein the moving state information acquiring unit acquires the moving state of the moving body detected by a movement supporting device for supporting a movement of the moving body as the moving state information.

4. A reception control device according to any one of claims 1 to 3, further comprising:
a map information acquiring unit for acquiring map information; and
a current position information acquiring unit for acquiring current position information on the current position of the moving body,
wherein, when the receiving state detector recognizes the deterioration of the receiving state of the radio waves, the reception control unit determines based on the map information whether or not the current position specified by the current position information is a point at which the radio waves cannot be received, and, when determining that the current position is the point at which the radio waves cannot be received, performs control of inhibiting the execution of the radio wave searching process by the radio wave searching unit.

5. A reception control device according to claim 4, wherein:
the map information acquiring unit acquires the map information from the movement supporting device for supporting the movement of the moving body on the basis of the map information; and
the current position information acquiring unit acquires the current position of the moving body detected by the movement supporting device as the current position information.

6. A reception device, comprising:
a reception unit for receiving radio waves of a predetermined frequency band at a current position of a moving body;
a receiving state detector for detecting a receiving state of the radio waves;
a radio wave searching unit for executing a radio wave searching process of making the reception unit receive the radio waves that are receivable at a different frequency band when recognizing that the deterioration of the receiving state of the radio waves has been detected; and
the reception control device according to any one of claims 1 to 5.

7. A reception device mounted to a moving body, comprising:
a reception unit for receiving radio waves of a predetermined frequency band at a current position of the moving body;
a receiving state detector for detecting a receiving state of the radio waves received by the reception unit;
a moving state information acquiring unit for acquiring moving state information on a moving state of the moving body; and
a reception control unit for performing, when recognizing that a deterioration of the receiving state of the radio waves has been detected, control of making the reception unit receive radio waves of another frequency band on the basis of the moving state of the moving body.

8. A reception device according to claim 7, wherein the reception control unit does not execute, when recognizing that the deterioration of the receiving state of the radio waves has been detected, the control of making the reception unit receive the radio waves of the another frequency band if the moving state of the moving body is equal to or lower than a predetermined speed.

9. A reception device according to claim 7 or 8, further comprising:
a map information acquiring unit for acquiring map information; and
a current position information acquiring unit for acquiring current position information on the current position of the moving body,
wherein the reception control unit determines, when recognizing that the deterioration of the receiving state of the radio waves has been detected, whether or not the current position specified by the current position information is a point at which the radio waves cannot be received based on the map information, and does not execute control of making the reception unit receive the radio waves of the another frequency band when determining that the current position is the point at which the radio waves cannot be received.

10. A reception device according to any one of claims 6 to 9, wherein:
the radio waves comprise broadcast waves;
the reception device further comprises a map information acquiring unit for acquiring map information containing broadcast area information on a broadcast wave-receivable area; and
when recognizing that the deterioration of the receiving state of the broadcast waves has been detected, the reception control unit makes the reception unit receive broadcast waves of another frequency band with the same broadcast content as a broadcast content of the broadcast waves that have been received by the reception unit.

11. A reproduction device, comprising:
the reception device according to any one of claims 6 to 10; and
an output control unit for processing the radio waves received by the reception device and making the output unit output the processed radio waves.

12. A reproduction device, comprising:
a movement supporting device for supporting a movement of a moving body by detecting a moving state of the moving body; and
the reception device according to any one of claims 6 to 10 for controlling reception of the radio waves on the basis of the moving state of the moving body detected by the movement supporting device.

13. A reception control method of controlling, by a calculation unit, reception of radio waves in a reception device mounted to a moving body, the reception device including: a reception unit for receiving radio waves of a predetermined frequency band at a current position of a moving body; a receiving state detector for detecting a receiving state of the radio waves; and a radio wave searching unit for executing a radio wave searching process of making the reception unit receive the radio waves that are receivable at a different frequency band if the receiving state of the radio waves deteriorates,
the reception control method comprising:
recognizing, by the calculation unit, a moving state of the moving body; and
performing, by the calculation unit, when the receiving state detector recognizes that the deterioration of the receiving state of the radio waves has been detected, control of regulating execution of the radio wave searching process by the radio wave searching unit on the basis of the moving state of the moving body.

14. A reception control method of controlling, by a calculation unit, reception of radio waves in a reception unit mounted to a moving body, for receiving the radio waves of a predetermined frequency band at a current position of the moving body, the reception control method comprising:
recognizing a receiving state of the radio waves received by the reception unit and recognizing a moving state of the moving body; and
performing, when recognizing the deterioration of the receiving state of the radio waves, control of making the reception unit receive radio waves of another frequency band on the basis of the moving state of the moving body.

15. A reception control program, which makes a calculation unit execute the reception control method according to claim 13 or 14.

16. A recording medium recorded with a reception control program, which is recorded with the reception control program according to claim 15 in a manner readable by a calculation unit.
